# EUROPEAN PATENT SPECIFICATION

(11) **EP 3 404 861 B1**
(45) Date of publication and mention of the grant of the patent: **12.01.2022**
(21) Application number: 17854380.7
(22) Date of filing: 24.03.2017
(51) Int. Cl.: H04L 1/00, H04B 7/04, H04B 7/06

(54) **HYBRID CHANNEL STATE INFORMATION FEEDBACK METHOD AND TERMINAL DEVICE**
VERFAHREN ZUR RÜCKMELDUNG VON ZUSTANDSINFORMATIONEN EINES HYBRIDEN KANALS UND ENDGERÄTEVORRICHTUNG
PROCÉDÉ DE RETOUR D'INFORMATIONS D'ÉTAT DE CANAL HYBRIDE ET DISPOSITIF TERMINAL

(30) Priority: 29.09.2016 CN 201610865613
(43) Date of publication of application: 21.11.2018
(73) Proprietor: Huawei Technologies Co., Ltd., Longgang District Shenzhen, Guangdong 518129 (CN)
(72) Inventor: XU, Kai, Shenzhen, Guangdong 518129 (CN); SUN, Yanliang, Shenzhen, Guangdong 518129 (CN); LIU, Bin, Shenzhen, Guangdong 518129 (CN); STIRLING-GALLACHER, Richard, Shenzhen, Guangdong 518129 (CN)
(74) Representative: Pfenning, Meinig & Partner mbB
(86) International application number: PCT/CN2017/078019
(87) International publication number: WO 2018/058921

(56) References cited:
- EP-A1- 3 358 757
- WO-A1-2017/193331
- CN-A- 103 312 400
- NOKIA ET AL: "Hybrid CSI Reporting Schemes based on Single CSI Process", 3GPP DRAFT; R1-166343 HYBRID CSI REPORTING SCHEMES BASED ON SINGLE CSI PROCESS_FINAL, 3RD GENERATION PARTNERSHIP PROJECT (3GPP), MOBILE COMPETENCE CENTRE ; 650, ROUTE DES LUCIOLES ; F-06921 SOPHIA-ANT , vol. RAN WG1, no. Gothenburg, Sweden; 20160822 - 20160826 12 August 2016 (2016-08-12), XP051132525, Retrieved from the Internet: URL:http://www.3gpp.org/ftp/tsg_ran/WG1_RL 1/TSGR1_86/Docs/ [retrieved on 2016-08-12]
- NOKIA et al.: "Hybrid CSI Reporting Scheme based on Single CSI Process", 3GPP TSG-RAN WG1#86 R1-166343, 26 August 2016 (2016-08-26), XP051132525, Retrieved from the Internet: URL:http://www.3gpp.org/ftp/tsg_ran/WG1_RL 1/TSGR1_86/Docs/
- XINWEI: "Further Discussion on Hybrid CSI Report for eFD-MIMO", 3GPP TSG-RAN WG1#86 R1-166580, 26 August 2016 (2016-08-26), XP051141869, Retrieved from the Internet: URL:http://www.3gpp.org/ftp/tsg_ran/WG1_RL 1/TSGR1_86/Docs/

## Description

### TECHNICAL FIELD

The present invention relates to the field of communications technologies, and in particular, to a method for feeding back hybrid channel state information, a terminal device, and a base station.

### BACKGROUND

In a conventional 4th generation communications technology (4th Generation, 4G) mobile communications system or a Long Term Evolution (Long Term Evolution, LTE) system, a main objective of downlink channel measurement is to obtain channel state information (Channel State Information, CSI), so that downlink scheduling and downlink data transmission are more convenient. If a spatial multiplexing or beamforming (Beamforming, BF) multiple-input multiple-output (Multiple Input Multiple Output, MIMO) transmission mode is used in a downlink, a terminal device needs to feed back CSI information to a side of a base station. The CSI includes a channel quality indicator (Channel Quality Indicator, CQI), a precoding matrix indicator (Precoding Matrix Indicator, PMI), a rank indicator (Rank Indicator, RI), and the like. CSI feedback supports periodic and aperiodic trigger manners. Usually, a period of the RI is longer than a period of the PMI and a period of the CQI.

A double codebook structure is introduced in Release 10 of a 3rd Generation Partnership Project (3rd Generation Partnership Project, 3GPP) communications system. In the double codebook structure, the PMI needs to be reported in two stages, and a precoding matrix generated based on the PMI reported in the two stages may be denoted as *W* = *W*₁ *W*₂. *W*₁ is a channel matrix generated by reporting a PMI in a first stage, reflects a wideband statistics feature of a channel within a relatively long time, and can be indicated as one beam cluster. *W*₂ is a channel matrix generated by reporting a PMI in a second stage, reflects a narrowband feature of a channel within a relatively short time, and is used to select a beam from the one beam cluster of *W*₁, and select phase parameters in different antenna polarization directions.

A beamformed CSI-RS is introduced in 3GPP Release 13, to enhance coverage performance of the CSI-RS while a non-beamformed CSI-RS is still reserved. In a case other than carrier aggregation, a terminal device supports a maximum of one CSI process, and does not support, in each CSI process, simultaneously sending CSI information based on the beamformed CSI-RS and CSI information based on the non-beamformed CSI-RS. When the CSI is reported based on the beamformed CSI-RS, in addition to an RI, a PMI, or a CQI, channel state information reference signal resource index (CSI-RS Resource Index, CRI) information needs to be further reported. A reporting period of the CRI is not shorter than a reporting period of the RI.

Usually, a hybrid CSI reporting mechanism based on the beamformed CSI-RS and the non-beamformed CSI-RS has been agreed. The CSI information based on the non-beamformed CSI-RS is reported in a first stage, only an indication of *W*₁ in the PMI information and/or the RI are/is reported, and an indication of *W*₂ in the PMI information and the CQI are not reported. The CSI information based on the beamformed CSI-RS when a quantity of CSI-RS resources is 1 is reported in a second stage, and the CSI information includes the RI, the PMI, and the CQI.

However, the existing hybrid CSI reporting mechanism does not provide a method for feeding back hybrid CSI based on different beamformed CSI-RS resources. Information overheads required for reporting the existing hybrid CSI are relatively high, and a configuration is not flexible enough. Consequently, inaccuracy of the reported information may be caused.

NOKIA ET AL, in "Hybrid CSI Reporting Schemes based on Single CSI Process", vol. RAN WG1, no. Gothenburg, Sweden; 20160822 - 20160826, (20160812), 3GPP DRAFT; R1-166343, describe Hybrid CSI reporting schemes in which beamformed CSI-RS are transmitted and CSI is reported in two stages.

EP 3 358 757 A1, published on August 8, 2018, describes a method for transmitting and receiving CSI and a device for supporting the same. Particularly, a method for transmitting CSI by a user equipment (UE) in a wireless communication system may include receiving a CSI process configuration from a base station (BS); and reporting CSI corresponding to a CSI process configured by the CSI process configuration, when the CSI process is configured as a beamformed CSI-RS type and the CSI process is associated with a single CSI-RS resource, a codebook used for deriving the CSI may be indicated by the CSI process configuration.

In WO 2017/193331 A1, published on November 16, 2017, describes a hybrid class B CSI-RS scheme is discussed which configures one cell-common beamformed CSI-RS resource for beam tracking and another UE-specific beamformed CSI-RS resource for CSI feedback. The cell-common beamformed CSI-RS resource may be transmitted at a longer periodicity and shared by UEs in the cell. The beamforming may be cycled over a set of predefined weights transparent to UE. The UE-specific beamformed CSI-RS may be transmitted at a shorter periodicity and can be activated dynamically to allow resource sharing among multiple UEs. The UEs will report a CSI for the cell-common beamformed CSI-RS resource which provides a quality indicator for the associated cell-common beam and is utilized by the base station to determine the precoding weight for the UE-specific beamformed CSI-RS resource. Both resources can be configured with different parameter sets, such as number of ports, codebook type, and CSI reporting parameters.

### SUMMARY

Embodiments of the present invention relate to a method for feeding back hybrid channel state information and a terminal device to resolve a prior-art problem that a method for feeding back hybrid CSI based on different beamformed CSI-RS resources is not provided, information reporting overheads are high, and a configuration is inflexible. According to the present application, the above described problem is solved by the claimed matter according to the independent claims.

Based on the claimed technical solutions, by using the method for feeding back hybrid channel state information and the terminal device that are provided in the embodiments of the present invention, the method for feeding back hybrid CSI can be implemented, so that average spectral efficiency of a cell user and spectral efficiency of a cell-edge user are increased, and interference between neighboring cells is reduced.

### BRIEF DESCRIPTION OF DRAWINGS

FIG. 1 is a schematic architectural diagram of a communications system according to an embodiment of the present invention;
FIG. 2 is a schematic diagram of a beam corresponding to a PMI according to an embodiment of the present invention.
FIG. 3 is a schematic diagram of reporting first hybrid CSI according to an embodiment of the present invention;
FIG. 4 is a schematic diagram of reporting second hybrid CSI according to an embodiment of the present invention;
FIG. 5 is a schematic diagram of reporting third hybrid CSI according to an embodiment of the present invention;
FIG. 6 is a schematic diagram of reporting fourth hybrid CSI according to an embodiment of the present invention;
FIG. 7 is a schematic diagram of reporting fifth hybrid CSI according to an embodiment of the present invention;
FIG. 8 is a schematic structural diagram of a terminal device according to an embodiment of the present invention;
FIG. 9 is a schematic structural diagram of another terminal device according to an embodiment of the present invention;
FIG. 10 is a schematic structural diagram of a base station according to an example useful for understanding the present invention; and
FIG. 11 is a schematic structural diagram of another base station according to an example useful for understanding the present invention.

### DESCRIPTION OF EMBODIMENTS

The following describes the technical solutions in the embodiments of the present invention with reference to the accompanying drawings in the embodiments of the present invention.

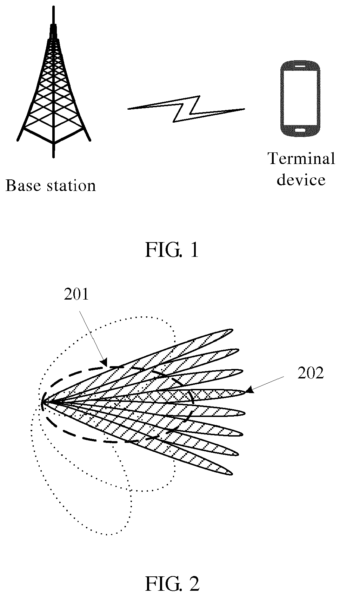

FIG. 1 is a schematic architectural diagram of a communications system according to an embodiment of the present invention. As shown in FIG. 1, the communications system includes: a terminal device and a base station. The terminal device and the base station communicate with each other through a physical channel. The terminal device performs downlink channel measurement, and feeds back CSI information to the base station. The base station schedules a downlink and sends downlink data based on the CSI information.

A technology described in this embodiment of the present invention may be applicable to an LTE system or a 4G system, or another multiple-antenna communications system using various radio access technologies. In addition, the technology may be further applicable to a subsequent evolved system of the LTE system, such as a Long Term Evolution Advanced (LTE-Advanced, LTE-A) system or a 5th generation communications technology (5 Generation, 5G) mobile communications system. For clarity, the 4G system is used as an example herein for description.

In a further mobile communications system, a multiple-antenna technology is widely used on a side of the base station and on a side of the terminal device. To further improve coverage performance and capacity performance of the mobile communications system, a downlink CSI-RS is sent by using a beamforming technology. A configuration type of a beamformed CSI-RS includes two cases: A quantity of CSI-RS resources is greater than 1 and the quantity of CSI-RS resources is equal to 1. When the quantity of CSI-RS resources is greater than 1, each CSI-RS resource may correspond to one transmit antenna port. When the quantity of CSI-RS resources is equal to 1, each CSI-RS resource usually corresponds to a plurality of transmit antenna ports. Different types of beamformed CSI-RSs report different CSI contents, and when the quantity of CSI-RS resources is greater than 1, a CRI needs to be reported. Because only one type of CSI-RS may be configured in one CSI process in a conventional mobile communications system, problems of CSI reporting inaccuracy and high overheads are caused. To further improve CSI reporting accuracy, and reduce CSI reporting overheads, hybridizing different types of CSI into one CSI process for reporting attracts public attention. For example, different from a time division duplex (Time Division Duplex, TDD) system, a frequency division duplex (Frequency Division Duplex, FDD) system cannot use channel reciprocity. Therefore, reporting hybrid CSI based on the beamformed CSI-RS appears to be particularly important.

In a further multiple-antenna mobile communications system, hybrid CSI is reported in two stages based on the beamformed CSI-RS. CSI used when a quantity of CSI-RS resources is greater than 1 is reported in a first stage, CSI used when a quantity of CSI-RS resources is equal to 1 is reported in a second stage, and the two different types of CSI are reported in one CSI process. There are several possible embodiment solutions below depending on whether codebooks used to report the CSI in the two stages are the same.

In a possible embodiment, the hybrid CSI is reported in the two stages based on the beamformed CSI-RS by using a same codebook. The CSI used when the quantity of beamformed CSI-RS resources is greater than 1 is reported in the first stage, and includes a CRI, an RI, and/or a PMI that correspond to n CSI-RS resources, and n is an integer greater than 1. The CSI reported in the second stage is based on the CSI reported in the first stage. The reported CSI used when the quantity of beamformed CSI-RS resources is equal to 1 includes a CRI, a PMI, a CQI, and/or an RI that correspond to one of n CSI-RS resources. Specifically, when the CSI is reported based on the beamformed CSI-RS, in addition to at least one of the RI, the PMI, and the CQI, CRI information needs to be reported both when the CSI is reported in the first stage and when the CSI is reported in the second stage.

The CRI reported in the CSI in the first stage indicates a CSI-RS sending resource corresponding to the CSI reported in the second stage. When a channel changes relatively slowly, because there is a relatively high probability that the RI reported in the CSI in the second stage is the same as the RI reported in the CSI in the first stage, the RI may not be reported in the CSI in the second stage. When the CSI is reported in the two stages by using the same codebook, a PMI matrix may be reported in the CSI in the first stage or may be reported in the CSI in the second stage. Alternatively, the PMI matrix may be separately reported in the CSI in the two stages. When the PMI matrix is reported in the CSI in the two stages, the PMI reported in the CSI in the first stage indicates a group of beams, and the PMI reported in the CSI in the second stage is used to select a beam and a phase from the group of beams. Specifically, reporting the CSI in the first stage may be configured to be triggered periodically, and reporting the CSI in the second stage may be configured to be triggered aperiodically, so that CSI reporting overheads can be reduced.

In another possible example useful for understanding the invention, the hybrid CSI is reported in the two stages based on the beamformed CSI-RS by using different codebooks. The CSI used when the quantity of beamformed CSI-RS resources is greater than 1 is reported in the first stage, and includes a CRI, an RI, and a PMI that correspond to n CSI-RS resources, and n is an integer greater than 1. The CSI reported in the second stage is based on the CSI reported in the first stage, and the reported CSI used when the quantity of beamformed CSI-RS resources is equal to 1 includes a CRI, an RI, a PMI and a CQI that correspond to one of n CSI-RS resources. The PMI reported in the CSI in the first stage may indicate a value range of the PMI reported in the CSI in the second stage. The CSI may be reported in the first stage by using a codebook having a relatively small dimension, and the CSI may be reported in the second stage by using a codebook having a relatively large dimension. A dimension of a codebook herein reflects a quantity of antennas performing beamforming, which is indicated by the codebook. Specifically, the PMI reported in the first stage can indicate a wide beam, and the PMI reported in the second stage is based on the PMI reported in the first stage. Therefore, a PMI searching range can be narrowed to obtain a more accurate beam.

The communications system provided in this embodiment of the present invention reports the hybrid CSI based on the beamformed CSI-RS. Therefore, information overheads of reporting the CSI are reduced, a flexible configuration can be implemented, and CSI reporting accuracy is improved, to increase a cell throughput. In addition, average spectral efficiency of a cell user and spectral efficiency of a cell-edge user are increased, and interference between neighboring cells is reduced.

In a possible embodiment, the terminal device reports channel state information CSI to the base station. The CSI is reported in two stages, CSI used when a quantity of beamformed channel state information reference signal CSI-RS resources is greater than 1 is reported in a first stage, CSI used when the quantity of beamformed CSI-RS resources is equal to 1 is reported in a second stage, and reporting the CSI in the two stages occupies one CSI reporting process.

In a possible embodiment, the CSI is reported in the two stages by using a same codebook, and the codebook is used to indicate a format of the CSI. That CSI used when a quantity of beamformed CSI-RS resources is greater than 1 is reported in a first stage includes: a CRI and an RI and optionally a PMI that correspond to n CSI-RS resources used when the quantity of beamformed CSI-RS resources is greater than 1 are reported in the first stage. That CSI used when the quantity of beamformed CSI-RS resources is equal to 1 is reported in a second stage includes: a CRI, a CQI, and an RI and/or a PMI that correspond to one of n CSI-RS resources used when the quantity of beamformed CSI-RS resources is equal to 1 are reported in the second stage.

In a possible embodiment, some parameters can be configured to support periodic reporting of the hybrid CSI, and specifically include: an offset of a subframe in which the CSI is reported in the first stage. The CSI configuration information indicates a CSI reporting subframe interval corresponding to different CSI-RS resources used when the CSI is periodically reported in the first stage. The parameters further include an offset of an interval between a subframe in which the CSI reported in the first stage and a subframe in which the CSI reported in the second stage. The CSI configuration information indicates an interval between a subframe in which the CSI is periodically reported in the first stage and a subframe in which the CSI is periodically reported in the second stage. In addition, a CSI reporting indication can be further configured, to indicate that the CSI is reported in the first stage or that the CSI is reported in the second stage. In addition, the following CSI configuration information may be further added: a codebook type indication. The CSI configuration information indicates a type of a codebook for reporting the CSI in the first stage and a type of a codebook for reporting the CSI in the second stage.

In a possible embodiment, the CSI configuration information can be sent by a network side or a side of the base station to a side of the terminal device, so that the side of the terminal device can use the CSI configuration information. Usually, periodically reported CSI configuration information is sent by using higher layer radio resource control (Radio Resource Control, RRC) signaling, and aperiodically reported CSI configuration information is sent by using a physical layer downlink control indicator (Downlink Control Indicator, DCI). Alternatively, the CSI configuration information may be automatically configured on the side of the terminal device, and related CSI configuration information is then sent to the side of the base station.

In a possible embodiment, the CRI reported in the CSI in the first stage indicates a CSI-RS sending resource corresponding to the CSI reported in the second stage. When a channel changes relatively slowly, because there is a relatively high probability that the RI reported in the CSI in the second stage is the same as the RI reported in the CSI in the first stage, the RI may not be reported in the CSI in the second stage.

In a possible embodiment, the PMI reported in the CSI in the first stage indicates a group of beams, and the PMI reported in the CSI in the second stage is used to select a beam and a phase. FIG. 2 is a schematic diagram of a beam corresponding to a PMI according to an embodiment of the present invention. As shown in FIG. 2, 201 represents the group of beams indicated by the PMI reported in the CSI in the first stage, and 202 represents the beam and the phase that are selected, by the PMI reported in the CSI in the second stage, in the group of beams shown in 201. Alternatively, in this embodiment of the present invention, the PMI information may be not reported in the CSI in the first stage, and the PMI information is reported in the CSI in the second stage. Alternatively, the PMI information is reported in the CSI in the first stage, and the PMI information is not reported in the CSI in the second stage.

In the method for reporting hybrid CSI provided in this embodiment of the present invention, a configuration is more efficient, reporting the CSI in the first stage may be configured to be triggered periodically, and reporting the CSI in the second stage may be configured to be triggered aperiodically, so that CSI reporting overheads can be reduced.

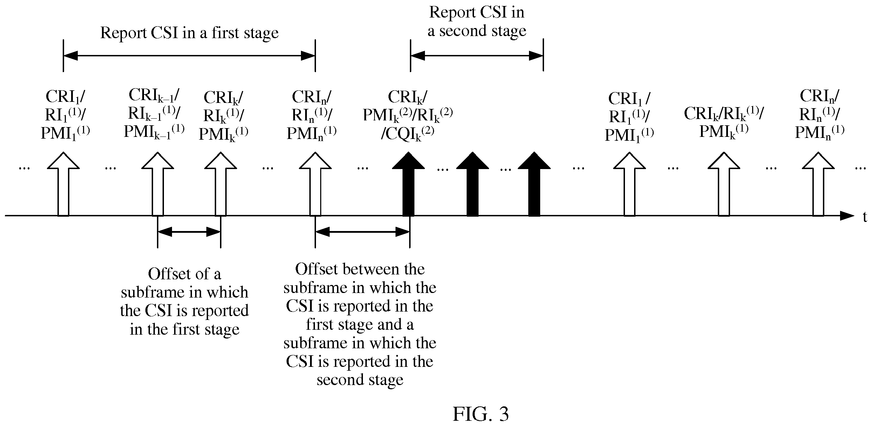

Correspondingly, FIG. 3 is a schematic diagram of reporting first hybrid CSI according to an embodiment of the present invention. As shown in FIG. 3, in a possible example, a terminal device periodically reports CSI to a base station in two stages. A CRI, an RI, and a PMI that correspond to n CSI-RS resources used when a quantity of beamformed CSI-RS resources is greater than 1 are reported in CSI in a first stage. For reporting CSI in a second stage, one piece of preferable CSI is selected from the CSI that corresponds to the n CSI-RS resources and that is reported in the CSI in the first stage. Assuming that a k^{th} CSI-RS resource corresponds to a piece of optimum CSI, a CRI, an RI, a PMI, and a CQI that correspond to the k^{th} CSI-RS resource are reported in the CSI in the second stage, where k is an integer greater than or equal to 1. The PMI reported in the first stage is used to indicate sending a group of beams, and the PMI reported in the second stage is used to select a beam and a phase.

In a possible example, the PMI reported in the CSI in the second stage is based on the PMI reported in the CSI in the first stage, and the PMI reported in the CSI in the first stage indicates a value range of the PMI reported in the CSI in the second stage. The CSI may be reported in the first stage by using a Release-12 codebook or a Release-13 codebook having a relatively small dimension, and the CSI may be reported in the second stage by using a Release-14 codebook having a relatively large dimension.

In a possible example, this embodiment further includes: determining, by the terminal device, CSI configuration information. The CSI configuration information includes at least one of a subframe offset parameter, a codebook parameter, and a CSI reporting indication.

Specifically, the subframe offset parameter is used to indicate a CSI reporting subframe interval corresponding to different CSI-RS resources used when the CSI is reported in the first stage and an interval between subframes in which the CSI is reported in the two stages. The subframe offset parameter includes a subframe interval offset of reporting the CSI in the first stage, and an offset of an interval between a subframe in which the CSI reported in the first stage and a subframe in which the CSI reported in the second stage. The CSI reporting subframe interval corresponding to different CSI-RS resources is determined based on the subframe interval offset of reporting the CSI in the first stage. The interval between the subframe in which the CSI reported in the first stage and the subframe in which the CSI reported in the second stage is determined based on the offset of the interval between the subframe in which the CSI reported in the first stage and the subframe in which the CSI reported in the second stage.

Specifically, the codebook parameter is used to indicate a format of the CSI reported in the first stage and a format of the CSI reported in the second stage.

Specifically, the CSI reporting indication is used to indicate that the CSI in the first stage is reported or that the CSI in the second stage is reported. In a possible implementation, the terminal device may determine, based on the CSI reporting indication, to report the CSI in the first stage or to report the CSI in the second stage. Likewise, the base station may also determine, by determining corresponding CSI configuration information, that a received subframe is a subframe in which the terminal device reports the CSI in the first stage or a subframe in which the terminal device reports the CSI in the second stage.

In a possible example, the CSI configuration information is configured or preconfigured by the base station.

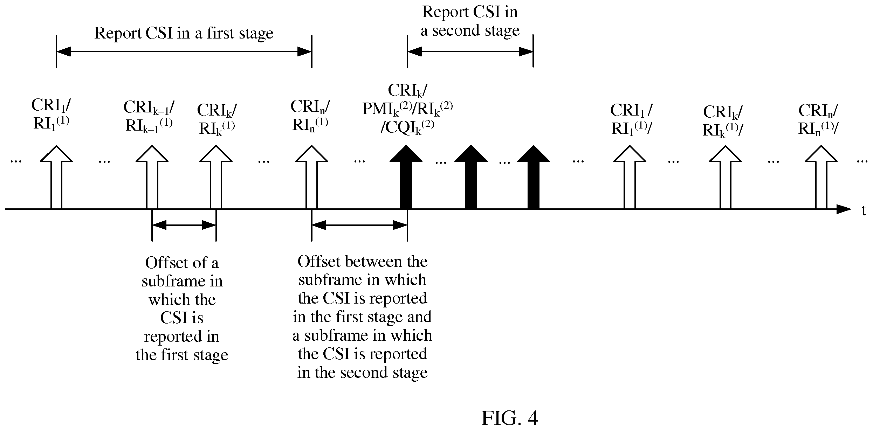

Correspondingly, FIG. 4 is a schematic diagram of reporting second hybrid CSI according to an embodiment of the present invention. As shown in FIG. 4, in a possible example, a terminal device periodically reports CSI to a base station in two stages. A CRI and an RI that correspond to n CSI-RS resources used when a quantity of beamformed CSI-RS resources is greater than 1 are reported in CSI in a first stage. For reporting CSI in a second stage, one piece of preferable CSI is selected from the CSI that corresponds to the n CSI-RS resources and that is reported in the CSI in the first stage. Assuming that a k^{th} CSI-RS resource corresponds to a piece of optimum CSI, a CRI, an RI, a PMI, and a CQI that correspond to the k^{th} CSI-RS resource are reported in the CSI in the second stage. In the embodiment shown in FIG.4, the PMI is not reported in the CSI in the first stage, and the PMI is not reported in the CSI in the second stage.

In a possible example, for determining information such as a subframe offset, a codebook, or a CSI reporting indication in FIG.4, refer to the descriptions in FIG. 2. Details are not described herein again.

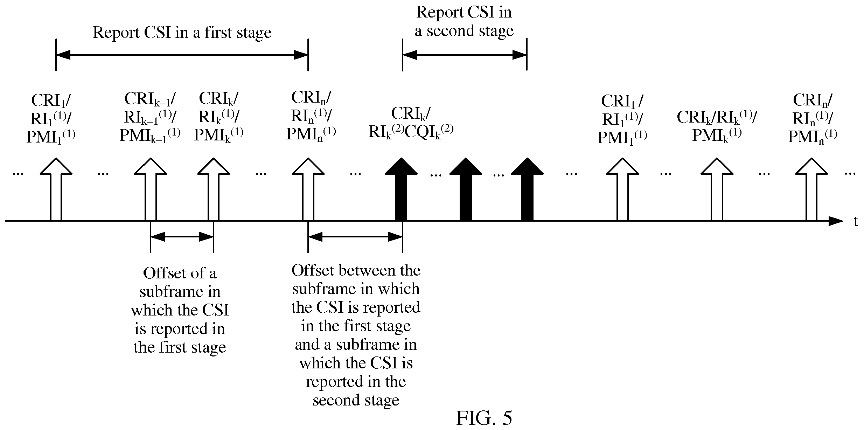

Correspondingly, FIG. 5 is a schematic diagram of reporting third hybrid CSI according to an embodiment of the present invention. As shown in FIG. 5, in a possible example, a terminal device periodically reports CSI to a base station in two stages. A CRI, an RI, and a PMI that correspond to CSI-RS resources used when a quantity of beamformed CSI-RS resources is greater than 1 are reported in CSI in a first stage. For reporting CSI in a second stage, one piece of preferable CSI is selected from the CSI that corresponds to the n CSI-RS resources and that is reported in the CSI in the first stage. Assuming that a k^{th} CSI-RS resource corresponds to a piece of optimum CSI, a CRI, an RI, and a CQI that correspond to the k^{th} CSI-RS resource are reported in the CSI in the second stage. In the example shown in FIG.5, the PMI is reported in the CSI in the first stage, and the PMI is not reported in the CSI in the second stage.

In a possible example, for determining of parameters, such as a subframe offset, a codebook, or a CSI reporting indication that are in FIG.5, refer to the descriptions in FIG. 2. Details are not described herein again.

In a possible embodiment, in the embodiments shown in FIG. 3 to FIG. 5, when the CSI is reported in the two stages by using a same codebook, when a channel changes relatively slowly, the RI may not be reported in the CSI in the second stage. For brevity, details are not described.

In the embodiments shown in FIG. 3 to FIG. 5 in this application, the CSI is reported in the second stage based on a result of reporting the CSI in the first stage, different codebooks may be used, and a searching range of the PMI reported in the CSI in the second stage is narrowed. Therefore, CSI reporting accuracy is improved, and CSI reporting overheads can be effectively reduced. Two types of different CSI information are reported in one CSI process in this embodiment of the present invention. Therefore, CSI reporting overheads are reduced.

In a possible example useful for understanding the invention, the CSI is reported in the two stages by using different codebooks. That CSI used when a quantity of beamformed CSI-RS resources is greater than 1 is reported in a first stage includes: a CRI, a PMI, and an RI that are used when the quantity of beamformed CSI-RS resources are greater than 1 are reported in the first stage. That CSI used when the quantity of beamformed CSI-RS resources is equal to 1 is reported in a second stage includes: a CRI, a CQI, a PMI, and an RI that are used when the quantity of beamformed CSI-RS resources is equal to 1 are reported in the second stage.

In a possible embodiment, the CSI reporting indication may further indicate that reporting is simultaneously performed in the first stage and in the second stage, or reporting is performed only in the first stage, or reporting is performed only in the second stage.

In a possible embodiment, CSI configuration information may be further added: an offset between a subframe in which the CSI is aperiodically reported in the first stage and a subframe in which the CSI is aperiodically reported in the second stage. The CSI configuration information indicates an interval between the subframe in which the CSI is aperiodically reported in the first stage and the subframe in which the CSI is aperiodically reported in the second stage.

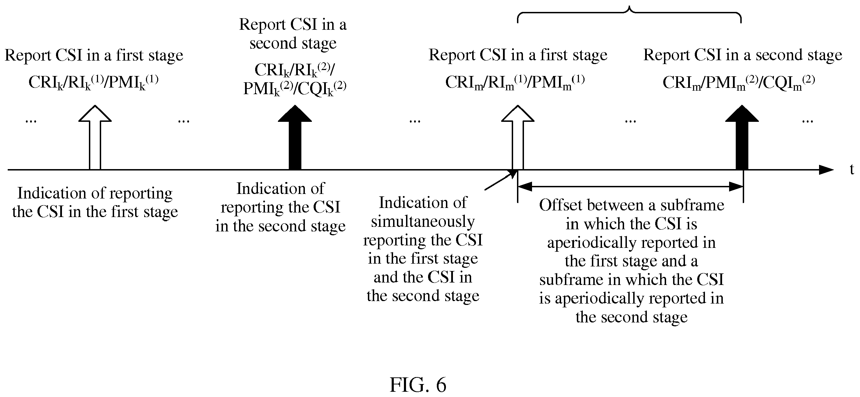

Correspondingly, FIG. 6 is a schematic diagram of reporting fourth hybrid CSI according to an embodiment of the present invention. As shown in FIG. 6, in a possible example, a terminal device aperiodically reports CSI to a base station in two stages. Aperiodically reporting hybrid CSI supports reporting CSI in a first stage, or reporting CSI in a second stage, or simultaneously reporting CSI in a first stage and CSI in a second stage. A specific reporting manner needs to be determined by using an indication of reporting the CSI in the first stage and/or an indication of reporting the CSI in the second stage. An interval between a subframe in which the CSI is aperiodically reported in the first stage and a subframe in which the CSI is aperiodically reported in the second stage is determined based on an offset between the subframe in which the CSI is aperiodically reported in the first stage and the subframe in which the CSI is aperiodically reported in the second stage. When the CSI is simultaneously reported in the first stage and in the second stage, an interval between a subframe in which the CSI is reported in the first stage and a subframe in which the CSI is reported in the second stage is indicated by an offset between a subframe in which the CSI is aperiodically reported in the first stage and a subframe in which the CSI is aperiodically reported in the second stage.

Specifically, when the hybrid CSI is aperiodically reported, the CSI reporting indication is used to indicate that the CSI is reported in the first stage, that the CSI is reported in the second stage, or that the CSI is simultaneously reported in the two stages. In a possible implementation, a period for reporting the CSI in the first stage is relatively long, and the CSI is reported in the second stage in a relatively short period or in an aperiodic trigger manner. Therefore, the terminal device may determine, based on the CSI reporting indication, that the CSI is reported in the first stage, that the CSI is reported in the second stage, or that the CSI is simultaneously reported in the two stages. Likewise, the base station may also determine, by determining corresponding CSI configuration information, that a received subframe is a subframe in which the terminal device reports the CSI in the first stage, a subframe in which the terminal device reports the CSI in the second stage, or a subframe in which the terminal device simultaneously reports the CSI in the two stages.

In this embodiment of the present invention, adding the CSI configuration information may support simultaneously reporting CSI in the first stage and in the second stage. Therefore, overheads of aperiodically reporting the CSI can be reduced. The CSI is reported in the first stage and in the second stage simultaneously and aperiodically, and overheads of aperiodically reporting the CSI can be reduced.

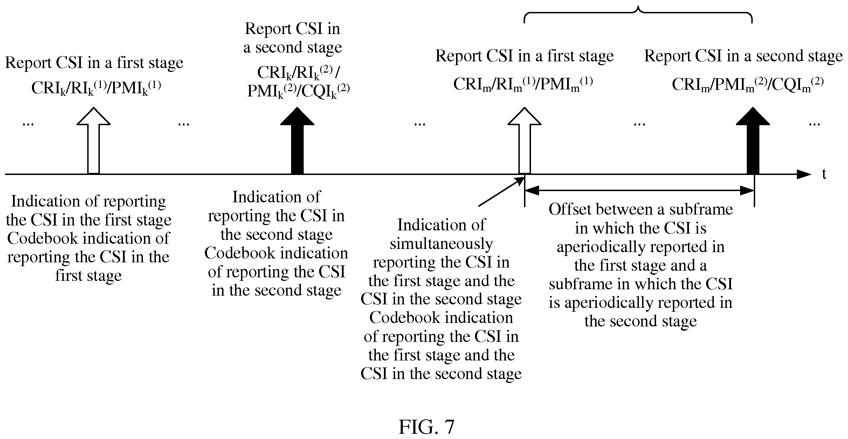

Correspondingly, FIG. 7 is a schematic diagram of reporting fifth hybrid CSI according to an embodiment of the present invention. As shown in FIG. 7, in a possible example, a terminal device aperiodically reports CSI to a base station in two stages. Aperiodically reporting hybrid CSI supports reporting CSI in a first stage, or reporting CSI in a second stage, or simultaneously reporting CSI in a first stage and CSI in a second stage. A specific reporting manner needs to be determined by using an indication of reporting the CSI in the first stage and/or an indication of reporting the CSI in the second stage. A specific codebook used for reporting needs to be determined by using a codebook indication. When the CSI is simultaneously reported in the first stage and in the second stage, an interval between a subframe in which the CSI is reported in the first stage and a subframe in which the CSI is reported in the second stage is indicated by an offset between a subframe in which the CSI is aperiodically reported in the first stage and a subframe in which the CSI is aperiodically reported in the second stage.

Specifically, when reporting the CSI, the terminal device may add CSI configuration information, such as CSI reporting indication information, codebook indication information, or subframe offset information, to the reported CSI information, so that the base station may accurately receive, based on the CSI configuration information carried in the CSI information, the CSI reported by the terminal device in the two stages.

In this example useful for understanding the present invention, adding the CSI configuration information may support simultaneously reporting the CSI in the first stage and in the second stage by using different codebooks. The CSI is reported in the second stage based on a result of reporting the CSI in the first stage. Therefore, a searching range of a PMI reported in the CSI in the second stage can be narrowed, and CSI reporting accuracy is improved. In this example useful for understanding the present invention, the CSI is reported in the first stage and in the second stage aperiodically and simultaneously by using different codebooks, and the searching range of the PMI reported in the CSI in the second stage is narrowed. Therefore, CSI reporting accuracy is improved.

In a possible embodiment, the base station receives the channel state information CSI reported by the terminal device in the two stages. The base station determines, based on the CSI configuration information, the CSI reported by the terminal device. The CSI configuration information includes at least one of a subframe offset parameter, a codebook parameter, and a CSI reporting indication. The subframe offset parameter is used to indicate a CSI reporting subframe interval corresponding to different CSI-RS resources used when CSI is reported in a first stage and an interval between subframes in which the CSI is reported in the two stages. The codebook parameter is used to indicate a format of the CSI reported in the first stage and a format of CSI reported in a second stage. The CSI reporting indication is used to indicate that the CSI is reported in the first stage, that the CSI is reported in the second stage, or that the CSI is simultaneously reported in the two stages.

In an example useful for understanding the invention, the base station determines the CSI configuration information based on information configured or preconfigured by the terminal device.

With reference to the embodiments shown in FIG. 1 to FIG. 7, in the method for feeding back hybrid CSI provided in the embodiments of the present invention, hybrid CSI is reported based on a beamformed CSI-RS. Therefore, average spectral efficiency of a cell user and spectral efficiency of a cell-edge user are increased, and interference between neighboring cells is reduced. In the method for feeding back hybrid CSI provided in this embodiment of the present invention, CSI reporting overheads can be reduced, and CSI reporting accuracy is improved, so that a cell throughput can be increased.

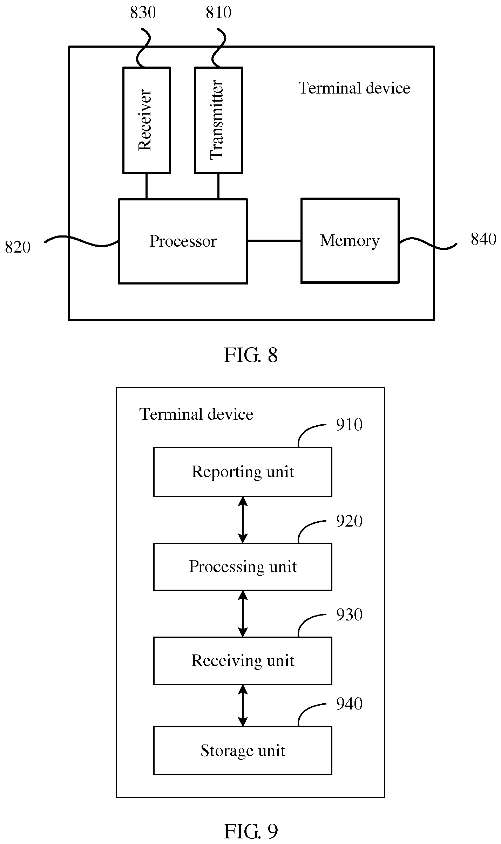

Correspondingly, an embodiment of the present invention provides a terminal device, to implement the method for feeding back hybrid CSI provided in the foregoing embodiments. As shown in FIG. 8, the terminal device includes: a transmitter 810, a processor 820, a receiver 830, and a memory 840.

The transmitter 810 of the terminal device provided in this embodiment is configured to report channel state information CSI to a base station. The CSI is reported in two stages, CSI used when a quantity of beamformed channel state information reference signal CSI-RS resources is greater than 1 is reported in a first stage, CSI used when the quantity of beamformed CSI-RS resources is equal to 1 is reported in a second stage, and reporting the CSI in the two stages occupies one CSI reporting process.

In a possible embodiment, the CSI includes at least one of a channel state information reference signal resource index CRI, a rank indicator RI, a precoding matrix indicator PMI, and a channel quality indicator CQI. The CSI is reported in the two stages by using a same codebook, and the codebook is used to indicate a format of the CSI. The transmitter 810 is specifically configured to: report, in the first stage, a CRI and an RI and/or a PMI that correspond to n CSI-RS resources used when the quantity of beamformed CSI-RS resources is greater than 1; and report, in the second stage, a CRI, a CQI, and an RI and/or a PMI that correspond to one of n CSI-RS resources used when the quantity of beamformed CSI-RS resources is equal to 1.

In an example useful for understanding the invention, the CSI includes at least one of a CRI, an RI, a PMI, and a CQI. The CSI is reported in the two stages by using different codebooks, and the codebooks are used to indicate formats of the CSI. The transmitter 810 is specifically configured to: report, in the first stage, a CRI, a PMI and an RI that correspond to n CSI-RS resources used when the quantity of beamformed CSI-RS resources is greater than 1; and report, in the second stage, a CRI, a CQI, a PMI, and an RI that correspond to one of n CSI-RS resources used when the quantity of beamformed CSI-RS resources is equal to 1.

In a possible embodiment, the PMI reported in the first stage is used to indicate a group of beams, and the PMI reported in the second stage is used to select a beam and a phase from the group of beams.

In a possible embodiment, a dimension of a codebook used to report the CSI in the first stage is less than a dimension of a codebook used to report the CSI in the second stage.

In a possible embodiment, the processor 820 is configured to determine CSI configuration information. The CSI configuration information includes at least one of a subframe offset parameter, a codebook parameter, and a CSI reporting indication. The subframe offset parameter is used to indicate a CSI reporting subframe interval corresponding to different CSI-RS resources used when the CSI is reported in the first stage and an interval between subframes in which the CSI is reported in the two stages. The codebook parameter is used to indicate a format of the CSI reported in the first stage and a format of the CSI reported in the second stage. The CSI reporting indication is used to indicate that the CSI is reported in the first stage, that the CSI is reported in the second stage, or that the CSI is simultaneously reported in the two stages.

In a possible embodiment, the processor 820 is specifically configured to determine the CSI configuration information based on information that is configured by the base station and that is received by the receiver 830. Alternatively, the processor 820 is specifically configured to determine the CSI configuration information based on preconfigured information stored in the memory 840.

In addition, the terminal device provided in this embodiment of the present invention may further use the following implementation, to implement the method for feeding back hybrid CSI in the foregoing embodiments of the present invention. As shown in FIG. 9, the terminal device includes: a reporting unit 910, a processing unit 920, a receiving unit 930, and a storage unit 940.

In an optional embodiment, the transmitter 810 in the embodiment in FIG. 8 may be replaced with the reporting unit 910. The processor 820 may be replaced with the processing unit 920. The receiver 830 may be replaced with the receiving unit 930. The memory 840 may be replaced with the storage unit 940.

For a processing procedure of each unit in FIG. 9, refer to the specific embodiments shown in FIG. 1 to FIG. 8. Details are not described herein again.

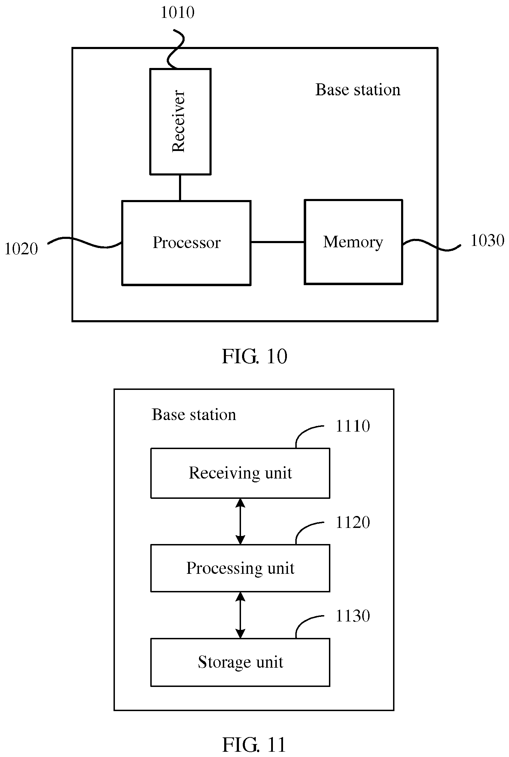

Correspondingly, an example useful for understanding the present invention provides a base station, to implement the method for feeding back hybrid CSI provided in the foregoing embodiments. As shown in FIG. 10, the base station includes: a receiver 1010, a processor 1020, and a memory 1030.

The receiver 1010 of the base station provided in this example is configured to receive channel state information CSI reported by a terminal device in two stages.

The processor 1020 is configured to determine, based on CSI configuration information, the CSI reported by the terminal device. The CSI configuration information includes at least one of a subframe offset parameter, a codebook parameter, and a CSI reporting indication. The subframe offset parameter is used to indicate a CSI reporting subframe interval corresponding to different CSI-RS resources used when CSI is reported in a first stage and an interval between subframes in which the CSI is reported in the two stages. The codebook parameter is used to indicate a format of the CSI reported in the first stage and a format of CSI reported in a second stage. The CSI reporting indication is used to indicate that the CSI is reported in the first stage, that the CSI is reported in the second stage, or that the CSI is simultaneously reported in the two stages.

In an example, the processor 1020 is specifically configured to determine the CSI configuration information based on information that is configured by the terminal device and that is received by the receiver 1010. Alternatively, the processor 1020 is specifically configured to determine the CSI configuration information based on preconfigured information stored in the memory 1030.

In addition, the base station provided in this example of the present invention may further use the following implementation, to implement the method for feeding back hybrid CSI in the foregoing embodiments of the present invention. As shown in FIG. 11, the base station includes: a receiving unit 1110, a processing unit 1120, and a storage unit 1130.

In an optional example, the receiver 1010 in the embodiment in FIG. 11 may be replaced with the receiving unit 1110. The processor 1020 may be replaced with the processing unit 1120. The memory 1030 may be replaced with the storage unit 1130.

For a processing procedure of each unit in FIG. 11, refer to the specific embodiments and examples shown in FIG. 1 to FIG. 7 and FIG. 10. Details are not described herein again.

Persons skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

Persons of ordinary skill in the art may understand that all or a part of the steps in each of the foregoing method of the embodiments may be implemented by a program instructing a processor. The foregoing program may be stored in a computer readable storage medium. The storage medium may be a non-transitory (English: non-transitory) medium, such as a random-access memory, read-only memory, a flash memory, a hard disk, a solid state drive, a magnetic tape (English: magnetic tape), a floppy disk (English: floppy disk), an optical disc (English: optical disc), or any combination thereof.

The foregoing descriptions are merely examples of specific embodiments of this application, but are not intended to limit the protection scope of this application. Any variation or replacement readily figured out by persons skilled in the art within the technical scope disclosed in this application shall fall within the protection scope of the claims.

## Claims

1. A method for feeding back hybrid channel state information, comprising:
reporting, by a terminal device, channel state information CSI to a base station, wherein the CSI is reported in two stages, CSI used when the quantity of beamformed channel state information reference signal CSI-RS resources is greater than 1 is reported in a first stage, CSI used when the quantity of beamformed CSI-RS resources is equal to 1 is reported in a second stage, and reporting the CSI in the two stages occupies one CSI reporting process;
wherein the CSI comprises at least one of a channel state information reference signal resource index CRI, a rank indicator RI, a precoding matrix indicator PMI, and a channel quality indicator CQI;
the CSI is reported in the two stages by using a same codebook, and the codebook is used to indicate a format of the CSI; when a quantity of beamformed CSI-RS resources is greater than 1 , the CSI reported in the first stage comprises:
a CRI and an RI that correspond to n CSI-RS resources used when the quantity of beamformed CSI-RS resources is greater than 1, wherein n is an integer greater than 1; and when the quantity of beamformed CSI-RS resources is equal to 1, the CSI reported in the second stage comprises:
a CRI, a CQI, and a PMI that correspond to one of n CSI-RS resources used when the quantity of beamformed CSI-RS resources is equal to 1 the CSI reported in the second stage does not comprise an RI.

2. The method according to claim 1, wherein the CSI reported in the first stage further comprises a PMI, and the PMI reported in the first stage is used to indicate a group of beams, and the PMI reported in the second stage is used to select a beam and a phase from the group of beams.

3. The method according to any one of claims 1 to 2, wherein the dimension of the codebook used to report the CSI in the first stage is less than the dimension of the codebook used to report the CSI in the second stage.

4. The method according to any one of claims 1 to 3, wherein the method further comprises:
determining, by the terminal device, CSI configuration information, wherein
the CSI configuration information comprises at least one of a subframe offset parameter, a codebook parameter, and a CSI reporting indication;
the subframe offset parameter is used to indicate a CSI reporting subframe interval corresponding to different CSI-RS resources used when the CSI is reported in the first stage and an interval between subframes in which the CSI is reported in the two stages;
the codebook parameter is used to indicate a format of the CSI reported in the first stage and a format of the CSI reported in the second stage; and
the CSI reporting indication is used to indicate that the CSI is reported in the first stage, that the CSI is reported in the second stage, or that the CSI is simultaneously reported in the two stages;
the determining, by the terminal device, CSI configuration information comprises:
determining, by the terminal device, the CSI configuration information based on information configured or preconfigured by the base station.

5. A terminal device, comprising:
a transmitter (810), configured to report channel state information CSI to a base station, wherein the CSI is reported in two stages, CSI used when a quantity of beamformed channel state information reference signal CSI-RS resources is greater than 1 is reported in a first stage, CSI used when the quantity of beamformed CSI-RS resources is equal to 1 is reported in a second stage, and reporting the CSI in the two stages occupies one CSI reporting process;
wherein the CSI comprises at least one of a channel state information reference signal resource index, CRI, a rank indicator, RI, a precoding matrix indicator, PMI, and a channel quality indicator, CQI; the CSI is reported in the two stages by using a same codebook, and the codebook is used to indicate a format of the CSI; the transmitter is specifically configured to: report, in the first stage, a CRI and an RI that correspond to n CSI-RS resources used when the quantity of beamformed CSI-RS resources is greater than 1, wherein n is an integer greater than 1; and report, in the second stage, a CRI, a CQI, and a PMI that correspond to one of n CSI-RS resources used when the quantity of beamformed CSI-RS resources is equal to 1, and the CSI used when the quantity of beamformed CSI-RS resources is equal to 1 reported in the second stage does not comprise an RI.

6. The terminal device according to claim 5, wherein the CSI reported in the first stage further comprises a PMI, and the PMI reported in the first stage is used to indicate a group of beams, and the PMI reported in the second stage is used to select a beam and a phase from the group of beams.

7. The terminal device according to any one of claims 5 or 6, wherein the dimension of the codebook used to report the CSI in the first stage is less than the dimension of the codebook used to report the CSI in the second stage.

8. The terminal device according to any one of claims 5 to 7, further comprising:
a processor (820), configured to determine CSI configuration information, wherein the CSI configuration information comprises at least one of a subframe offset parameter, a codebook parameter, and a CSI reporting indication; the subframe offset parameter is used to indicate a CSI reporting subframe interval corresponding to different CSI-RS resources used when the CSI is reported in the first stage and an interval between subframes in which the CSI is reported in the two stages; the codebook parameter is used to indicate a format of the CSI reported in the first stage and a format of the CSI reported in the second stage; and the CSI reporting indication is used to indicate that the CSI is reported in the first stage, that the CSI is reported in the second stage, or that the CSI is simultaneously reported in the two stages;
further comprising: a receiver (830) and a memory (840), wherein
the processor (820) is specifically configured to determine the CSI configuration information based on information that is configured by the base station and that is received by the receiver (830); or the processor (820) is specifically configured to determine the CSI configuration information based on preconfigured information stored in the memory (840).

## Patentansprüche

1. Verfahren zur Rückmeldung von Zustandsinformationen eines hybriden Kanals, umfassend:
Berichten, durch eine Endgerätevorrichtung, von Kanalzustandsinformationen CSI an eine Basisstation, wobei die CSI in zwei Stufen berichtet werden, wobei CSI, die verwendet werden, wenn die Anzahl von strahlgeformten Kanalzustandsinformationsreferenzsignal-CST-RS-Ressourcen größer als 1 ist, in einer ersten Stufe berichtet werden, CSI, die verwendet werden, wenn die Anzahl von strahlgeformten CSI-RS-Ressourcen gleich 1 ist, in einer zweiten Stufe berichtet werden, und das Berichten der CSI in den zwei Stufen einen CSI-Berichterstattungsprozes belegt;
wobei die CSI einen Kanalzustandsinformations-Referenzsignalressourcenindex CRI und/oder einen Rangindikator RI und/oder einen Vorcodierungsmatrixindikator PMI und/oder einen Kanalqualitätsindikator CQI umfassen;
die CSI in den beiden Phasen unter Verwendung desselben Codebuchs berichtet werden, und das Codebuch verwendet wird, um ein Format der CSI anzugeben;
wenn eine Anzahl von strahlengeformten CSI-RS-Ressourcen größer als 1 ist,
umfassen die in der ersten Stufe berichteten CSI:
einen CRI und einen RI, die n CSI-RS-Ressourcen entsprechen, die verwendet werden, wenn die Anzahl der strahlgeformten CSI-RS-Ressourcen größer als 1 ist,
wobei n eine ganze Zahl größer als 1 ist; und
wenn die Anzahl von strahlengeformten CSI-RS-Ressourcen gleich 1 ist, umfassen.
die in der zweiten Stufe berichtete CSI:
einen CRI, einen CQI und einen PMI, die einer von n verwendeten CSI-RS-Ressourcen entsprechen, wenn die Anzahl der strahlgeformten CSI-RS-Ressourcen gleich 1 ist und die in der zweiten Stufe berichteten CSI keinen RI umfassen.

2. Verfahren nach Anspruch 1, wobei die in der ersten Stufe berichteten CSI ferner einen PMI umfassen, und der in der ersten Stufe berichtete PMI verwendet wird, um eine Gruppe von Strahlen anzugeben, und der in der zweiten Stufe berichtete PMI verwendet wird, um einen Strahl und eine Phase aus der Gruppe von Strahlen auszuwählen.

3. Verfahren nach einem der Ansprüche 1 bis 2, wobei die Dimension des Codebuchs, das verwendet wird, um die CSI in der ersten Stufe zu berichten, kleiner ist als die Dimension des Codebuchs, das verwendet wird, um die CSI in der zweiten Stufe zu berichten.

4. Verfahren nach einem der Ansprüche 1 bis 3, wobei das Verfahren ferner umfasst:
Bestimmen von CSI-Konfigurationsinformationen durch die Endgerätevorrichtung,
wobei
die CSI-Konfigurationsinformationen einen Subframe-Offset-Parameter und/oder einen Codebuchparameter und/oder eine CSI-Berichtsangabe umfassen;
der Subframe-Offset-Parameter verwendet wird, um ein CSI-Berichts-Subframe-Intervall anzugeben, das verschiedenen CSI-RS-Ressourcen entspricht, die verwendet werden, wenn die CSI in der ersten Stufe berichtet werden, und ein Intervall zwischen Subframes, in denen die CSI in den beiden Stufen berichtet werden;
der Codebuchparameter verwendet wird, um ein Format der in der ersten Stufe berichteten CSI und ein Format der in der zweiten Stufe berichteten CSI anzugeben;
und
die CSI-Berichtsangabe verwendet wird, um anzugeben, dass die CSI in der ersten Stufe berichtet werden, dass die CSI in der zweiten Stufe berichtet werden oder dass die CSI gleichzeitig in den beiden Stufen berichtet werden;
das Bestimmen von CSI-Konfigurationsinformationen durch die Endgerätevorrichtung umfasst:
Bestimmen der CSI-Konfigurationsinformationen durch die Endgerätevorrichtung, basierend auf Informationen, die durch die Basisstation konfiguriert oder vorkonfiguriert werden.

5. Endgerätevorrichtung, umfassend:
einen Sender (810), der dazu konfiguriert ist, Kanalzustandsinformationen CSI an eine Basisstation zu berichten, wobei die CSI in zwei Stufen berichtet werden, CSI,
die verwendet werden, wenn eine Anzahl von strahlgeformten Kanalzustandsinformationsreferenzsignal- CSI-RS-Ressourcen größer als 1 ist, in einer ersten Stufe berichtet werden, CSI, die verwendet werden, wenn die Anzahl von strahlgeformten CSI-RS-Ressourcen gleich 1 ist, in einer zweiten Stufe berichtet werden, und das Berichten der CSI in den zwei Stufen einen CSI-Berichterstattungsprozess belegt;
wobei die CSI einen Kanaizustandsinformations-Referenzsignalressourcenindex, CRI, und/oder einen Rangindikator, RI, und/oder einen Vorcodjerungsmatrixindikator, PMI, und/oder einen Kanalqualitätsindtkator, CQI,
umfassen; die CSI in den beiden. Stufen unter Verwendung desselben Codebuchs berichtet werden und das Codebuch verwendet wird, um ein Format der CSI anzugeben; wobei der Sender insbesondere dazu konfiguriert ist: in der ersten Stufe einen CRI und einen RI zu berichten, die n verwendeten CSI-RS-Ressourcen entsprechen, wenn die Anzahl der strahlgeformten CSI-RS-Ressourcen größer als 1 ist, wobei n eine ganze Zahl größer als 1 ist; und in der zweiten Stufe einen CRI,
einen CQI und einen PMI zu berichten, die einer von n CSI-RS-Ressourcen entsprechen, die verwendet werden, wenn die Anzahl der strahlengeformten CSI-RS-Ressourcen gleich 1 ist, und die CSI, die verwendet werden, wenn die Anzahl der strahlengeformten CSI-RS-Ressourcen gleich 1 ist, die in der zweiten Stufe berichtet werden, keinen RI umfassen.

6. Endgerätevorrichtung nach Anspruch 5, wobei die in der ersten Stufe berichteten CSI ferner einen PMI umfassen, und der in der ersten Stufe berichtete PMI verwendet wird, um eine Gruppe von Strahlen anzugeben, und der in der zweiten Stufe berichtete PMI verwendet wird, um einen Strahl und eine Phase aus der Gruppe von Strahlen auszuwählen.

7. Endgerätevorrichtung nach einem der Ansprüche 5 oder 6, wobei die Dimension des Codebuchs, das verwendet wird, um die CSI in der ersten Stufe zu berichten, kleiner ist als die Dimension des Codebuchs, das verwendet wird, um die CSI in der zweiten Stufe zu berichten.

8. Endgerätevorrichtung nach einem der Ansprüche 5 bis 7, ferner umfassend:
einen Prozessor (820), der dazu konfiguriert ist, CSI-Konfigurationsinformationen zu bestimmen, wobei die CSI-Konfigurationsinformationen einen Subframe-Offset-Parameter und/oder einem Codebuchparameter und/oder eine CSI-Berichtsangabe umfassen; wobei der Subframe-Offset-Parameter dazu verwendet wird, ein CSI-Berichts-Subframe-Intervall, das verschiedenen CSI-RS-Ressourcen entspricht, die verwendet werden, wenn die CSI in der ersten Stufe berichtet werden, und ein Intervall zwischen Subframes, in denen, die CSI in den beiden Stufen berichtet werden, anzugeben; der Codebuchparameter verwendet wird, um ein Format der in der ersten Stufe berichteten CSI und ein Format der in der zweiten Stufe berichteten CSI anzugeben; und die CSI-Berichtsangabe verwendet wird, um anzugeben, dass die CSI in der ersten Stufe berichtet werden, dass die CSI in der zweiten Stufe berichtet werden, oder dass die CSI gleichzeitig in den beiden Stufen berichtet werden;
ferner umfassend: einen Empfänger (830) und einen Speicher (840), wobei der Prozessor (820) insbesondere dazu konfiguriert ist, die CSI-Konfigurationsinformationen basierend auf Informationen zu bestimmen, die durch die Basisstation konfiguriert werden und die von dem Empfänger (830) empfangen werden; oder der Prozessor (820) insbesondere dazu konfiguriert ist, die CSI-Konfigurationsinformationen basierend auf vorkonfigurierten Informationen, zu bestimmen, die in dem Speicher (840) gespeichert sind.

## Revendications

1. Procédé de retour d'informations d'état de canal hybrides, comprenant :
le rapport, par un dispositif terminal, d'informations d'état de canal CSI à une station de base, les CSI étant rapportées dans deux étages, des CSI utilisées lorsque la quantité de ressources de signal de référence d'informations d'état de canal CSI-RS formées par faisceau est supérieure à 1 étant rapportées dans un premier étage, des CSI utilisées lorsque la quantité de ressources CSI-RS formées par faisceau est égale à 1 étant rapportées dans un second étage, et le rapport des CSI dans les deux étages occupant un processus de rapport de CSI ;
les CSI comprenant au moins l'un d'un indice de ressource de signal de référence d'informations d'état de canal, CRI, d'un indicateur de rang, RI, d'un indicateur de matrice de précodage, PMI, et d'un indicateur de qualité de canal, CQI ;
les CSI étant rapportées dans les deux étages en utilisant un même livre de codes, et le livre de codes étant utilisé pour indiquer un format des CSI ;
lorsqu'une quantité de ressources CSI-RS formées par faisceau est supérieure à 1, les CSI rapportées dans le premier étage comprenant :
un CRI et un RI qui correspondent à n ressources CSI-RS utilisées lorsque la quantité de ressources CSI-RS formées par faisceau est supérieure à 1, n étant un entier supérieur à 1 ; et
lorsque la quantité de ressources CSI-RS formées par faisceau est égale à 1, les CSI rapportées dans le second étage comprenant :
un CRI, un CQI, et un PMI qui correspondent à l'une des n ressources CSI-RS utilisées lorsque la quantité de ressources CSI-RS formées par faisceau est égale à 1 et que les CSI rapportées dans le second étage ne comprennent pas de RI.

2. Procédé selon la revendication 1, les CSI rapportées dans le premier étage comprenant en outre un PMI, et le PMI rapporté dans le premier étage étant utilisé pour indiquer un groupe de faisceaux, et le PMI rapporté dans le second étage étant utilisé pour sélectionner un faisceau et une phase dans le groupe de faisceaux.

3. Procédé selon l'une quelconque des revendications 1 à 2, la dimension du livre de codes utilisé pour rapporter les CSI dans le premier étage étant inférieure à la dimension du livre de codes utilisé pour rapporter les CSI dans le second étage.

4. Procédé selon l'une quelconque des revendications 1 à 3, le procédé déterminant en outre, par le dispositif terminal, des informations de configuration CSI,
les informations de configuration CSI comprenant au moins l'un d'un paramètre de décalage de sous-frame, d'un paramètre de livre de codes, et d'une indication de rapport de CSI ;
le paramètre de décalage de sous-trame étant utilisé pour indiquer un intervalle de sous-trame de rapport de CSI correspondant à différentes ressources CSI-RS utilisées lorsque les CSI sont rapportées dans le premier étage et un intervalle entre des sous-trames dans lequel les CSI sont rapportées dans les deux étages ;
le paramètre de livre de code étant utilisé pour indiquer un format des CSI rapportées dans le premier étage et un format des CSI rapportées dans le second étage ; et l'indication de rapport de CSI étant utilisée pour indiquer que les CSI sont rapportées dans le premier étage, que les CSI sont rapportées dans le second étage, ou que les CSI sont rapportées simultanément dans les deux étages ;
la détermination, par le dispositif terminal, d'informations de configuration CSI comprenant :
la détermination, par le dispositif terminal, des informations de configuration CSI sur la base des informations configurées ou préconfigurées par la station de base.

5. Dispositif terminal, comprenant :
un émetteur (810), configuré pour rapporter des informations d'état de canal CSI à une station de base, les CSI étant rapportées dans deux étages, des CSI utilisées lorsqu'une quantité de ressources CSI-RS de signal de référence d'informations d'état de canal formé par faisceau est supérieure à 1 étant rapportées dans un premier étage, des CSI utilisées lorsque la quantité de ressources CSI-RS formées par faisceau est égale à 1 étant rapportées dans un second étage, et le rapport des CSI dans les deux étages occupant un processus de rapport de CSI ;
les CSI comprenant au moins l'un d'un indice de ressource de signal de référence d'informations d'état de canal, CRI, d'un indicateur de rang, RI, d'un indicateur de matrice de précodage, PMI, et d'un indicateur de qualité de canal, CQI ; les CSI étant rapportées dans les deux étages en utilisant un même livre de codes, et le livre de codes étant utilisé pour indiquer un format des CSI ; l'émetteur étant spécifiquement configuré pour : rapporter, dans le premier étage, un CRI et un RI qui correspondent à n ressources CSI-RS utilisées lorsque la quantité de ressources CSI-RS formées par faisceau est supérieure à 1, n étant un entier supérieur à 1 ; et rapporter, dans le second étage, un CRI, un CQI et un PMI qui correspondent à l'une des n ressources CSI-RS utilisées lorsque la quantité de ressources CSI-RS formées par faisceau est égale à 1, et que les CSI utilisées lorsque la quantité de ressources CSI-RS formées par faisceau est égale à 1 rapportées dans le second étage ne comprennent pas de RI.

6. Dispositif terminal selon la revendication 5, les CSI rapportées dans le premier étage comprenant en outre un PMI. et le PMI rapporté dans le premier étage étant utilisé pour indiquer un groupe de faisceaux, et le PMI rapporté dans le second étage étant utilisé pour sélectionner un faisceau et une phase dans le groupe de faisceaux.

7. Dispositif terminal selon l'une quelconque des revendications 5 et 6, la dimension du livre de codes utilisé pour rapporter les CSI dans le premier étage étant inférieure à la dimension du livre de codes utilisé pour rapporter les CSI dans le second étage.

8. Dispositif terminal selon l'une quelconque des revendications 5 à 7, comprenant en outre :
un processeur (820), con figuré pour déterminer des informations de configuration CSI, les informations de configuration CSI comprenant au moins l'un d'un paramètre de décalage de sous-trame, d'un paramètre de livre de codes, et d'une indication de rapport de CSI ; le paramètre de décalage de sous-trame étant utilisé pour indiquer un intervalle de sous-trame de rapport de CSI correspondant à différentes ressources CSI-RS utilisées lorsque les CSI sont rapportées dans le premier étage et un intervalle entre des sous-trames dans lequel les CSI sont rapportées dans les deux étages ; le paramètre de livre de code étant utilisé pour indiquer un format des CSI rapportées dans le premier étage et un format des CSI rapportées dans le second étage ; et l'indication de rapport de CSI étant utilisée pour indiquer que les CSI sont rapportées dans le premier étage, que les CSI sont rapportées dans le second étage, ou que les CSI sont rapportées simultanément dans les deux étages ;
comprenant en outre : un récepteur (830) et une mémoire (840),
le processeur (820) étant spécifiquement configuré pour déterminer les informations de configuration CSI sur la base des informations qui sont configurées par la station de base et qui sont reçues par le récepteur (830) ; ou le processeur (820) étant spécifiquement configuré pour déterminer les informations de configuration CSI sur la base des informations préconfigurées stockées dans la mémoire (840).
